(19) Europäisches Patentamt
European Patent Office
Office européen des brevets

(11) **EP 2 879 341 B1**

(12) # FASCICULE DE BREVET EUROPEEN

(45) Date de publication et mention de la délivrance du brevet:
**31.08.2022 Bulletin 2022/35**

(21) Numéro de dépôt: **14192852.3**

(22) Date de dépôt: **12.11.2014**

(51) Classification Internationale des Brevets (IPC):
**H04L 25/02** $^{(2006.01)}$ **H04L 25/03** $^{(2006.01)}$
**H04L 27/26** $^{(2006.01)}$

(52) Classification Coopérative des Brevets (CPC):
**H04L 27/2654; H04L 25/022; H04L 25/0232;**
**H04L 25/0236; H04L 27/2647;** H04L 27/26416;
H04L 2025/03796

(54) **Méthode d'estimation de canal pour système de télécommunication FBMC**

Methode zur Kanalabschätzung für FBMC-Telekommunikationssystem

Channel-estimation method for FBMC telecommunication system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2013 FR 1361790**

(43) Date de publication de la demande:
**03.06.2015 Bulletin 2015/23**

(73) Titulaire: **Commissariat à l'Énergie Atomique et aux Énergies Alternatives**
**75015 Paris (FR)**

(72) Inventeurs:
• **Dore, Jean-Baptiste**
**38950 Saint-Martin-Le Vinoux (FR)**
• **Berg, Vincent**
**38700 Corenc (FR)**

(74) Mandataire: **Brevalex**
**56, Boulevard de l'Embouchure**
**B.P. 27519**
**31075 Toulouse Cedex 2 (FR)**

(56) Documents cités:
• **MAURICE BELLANGER ET AL: "OFDM and FBMC transmission techniques: a compatible high performance proposal for broadband power line communications", POWER LINE COMMUNICATIONS AND ITS APPLICATIONS (ISPLC), 2010 IEEE INTERNATIONAL SYMPOSIUM ON, IEEE, PISCATAWAY, NJ, USA, 28 mars 2010 (2010-03-28), pages 154-159, XP031686454, ISBN: 978-1-4244-5009-1**
• **CARLOS AURELIO FARIA DA ROCHA ET AL: "Sub-channel equalizer design based on geometric interpolation for FBMC/OQAM systems", CIRCUITS AND SYSTEMS (ISCAS), 2011 IEEE INTERNATIONAL SYMPOSIUM ON, IEEE, 15 mai 2011 (2011-05-15), pages 1279-1282, XP031997867, DOI: 10.1109/ISCAS.2011.5937804 ISBN: 978-1-4244-9473-6**
• **LÉLÉ C ET AL: "Channel estimation methods for preamble-based OFDM/OQAM modulations", EUROPEAN TRANSACTIONS ON TELECOMMUNICATIONS, WILEY & SONS, CHICHESTER, GB, vol. 19, no. 7, 1 novembre 2008 (2008-11-01), pages 741-750, XP001517656, ISSN: 1124-318X, DOI: 10.1002/ETT.1332**
• **ELEFTHERIOS KOFIDIS ET AL: "Preamble-based channel estimation in MIMO-OFDM/OQAM systems", SIGNAL AND IMAGE PROCESSING APPLICATIONS (ICSIPA), 2011 IEEE INTERNATIONAL CONFERENCE ON, IEEE, 16 novembre 2011 (2011-11-16), pages 579-584, XP032106941, DOI: 10.1109/ICSIPA.2011.6144161 ISBN: 978-1-4577-0243-3**

**Description**

**DOMAINE TECHNIQUE**

La présente invention concerne de manière générale le domaine des systèmes de télécommunication utilisant une modulation multi-porteuse à banc de filtres, encore dénommés systèmes FBMC (Filter Bank Multi-Carrier).

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Celle-ci est mise en œuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL), la quatrième génération de téléphonie cellulaire (LTE), etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

Une modulation par banc de filtres ou FBMC (Filter Bank Multi Carrier) peut être utilisée comme alternative à la modulation OFDM.

Une comparaison entre les systèmes FBMC et les systèmes OFDM est présentée dans l'article de B. Farhang-Bouroujeny intitulé « OFDM versus filter bank multicarrier » publié dans IEEE Signal Processing Magazine, pp. 91-112, Mars 2011.

Le principe de la modulation FBMC est basé sur une synthèse par banc de filtres à l'émission et une analyse par banc de filtres à la réception.

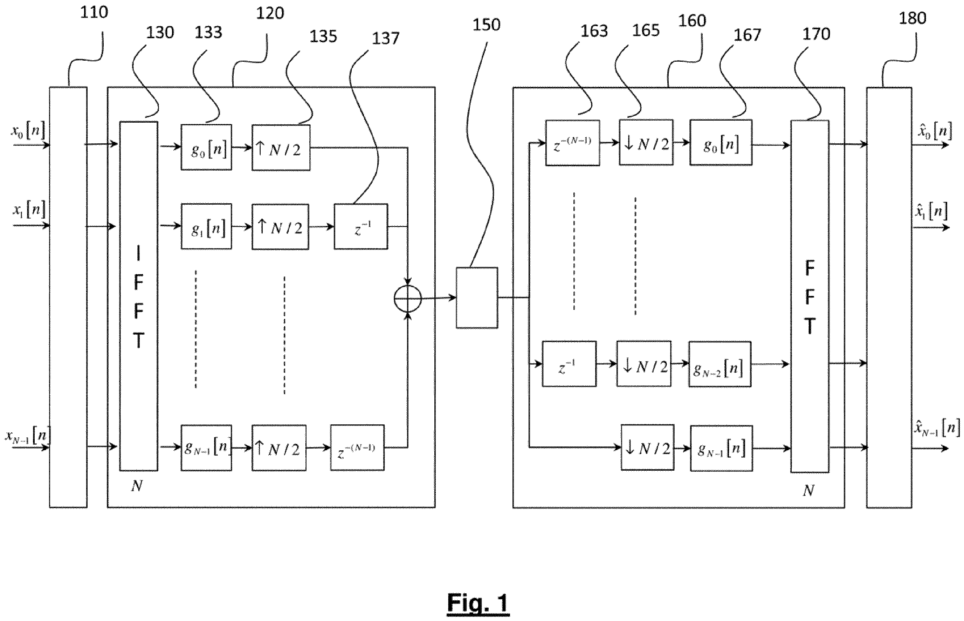

La Fig. 1 représente de manière schématique la structure d'un premier système d'émission/ réception FBMC connu de l'état de la technique.

Cette structure a été décrite en détail dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Au niveau de l'émetteur, les symboles de modulation QAM à transmettre avec une cadence $Nf$ où $f = 1/T$ sont groupés par blocs de taille $N$, $x_0[n],...,x_{N-1}[n]$, où $n$ est l'indice temporel du bloc. Chaque bloc de $N$ symboles est fourni en parallèle à $N$ voies d'entrée d'un module de prétraitement 110, dit prétraitement OQAM (Offset QAM). Ce module de prétraitement effectue une modulation des données de type OQAM, c'est-à-dire démultiplexe temporellement la partie réelle et la partie imaginaire de $x_k[n]$ avec une cadence de $2f$.

Les échantillons ainsi obtenus sont fournis sous la forme de blocs de taille $N$ à un banc de filtres de synthèse 120, constitué d'un module IFFT (transformée de Fourier rapide inverse) de taille $N$, 130, d'une pluralité $N$ de filtres polyphasés 133, d'une pluralité de sur-échantillonneurs 135, de facteur $M = N / 2$, en sortie des différents filtres polyphasés, et enfin d'une pluralité de retards, 137, arrangés en parallèle et variant de 0 à $N$ - 1 périodes d'échantillonnage. Chacune des $N$ voies de traitement correspond à un sous-canal.

Les sorties des filtres polyphasés, sur-échantillonnées et retardées sont sommées par l'additionneur 139 avant transmission sur le canal 150.

Les filtres polyphasés sont des versions translatées en fréquence de $k / MT$ d'un filtre prototype dont la réponse impulsionnelle est de durée $KT$, autrement dit la sortie d'un filtre polyphasé recouvre temporellement la sortie du filtre polyphasé adjacent de $M$ échantillons. Il en résulte qu'une sortie de filtre polyphasé recouvre temporellement $K$ autres sorties de filtres polyphasés. Le coefficient $K$ est dénommé pour cette raison coefficient de recouvrement (*overlapping factor*).

Du côté du récepteur, le signal reçu est échantillonné avec une cadence $Nf$. Les échantillons sont fournis sous forme de blocs de taille $N$ à un banc de filtres d'analyse, 160, comprenant une pluralité de retards, 163, arrangés en parallèle et variant de 0 à $N$ -1 périodes d'échantillonnage, dans l'ordre inverse des retards 137. Les flux d'échantillons issus des différents retards sont ensuite décimés d'un facteur $M = N / 2$ par les décimateurs 165 puis filtrés par les filtres d'analyse 167. Les filtres d'analyse ont une réponse impulsionnelle conjuguée et inversée temporellement par rapport au filtre de synthèse correspondant. Etant donné que le filtre prototype est à valeurs réelles et symétrique par inversion temporelle, on peut montrer qu'un filtre d'analyse a la même réponse impulsionnelle que le filtre de synthèse correspondant. La combinaison d'un filtre de synthèse avec le filtre d'analyse correspondant (produit des fonctions de transfert) donne un filtre de Nyquist.

Les symboles en sortie des filtres de synthèse font ensuite l'objet d'une FFT (transformée de Fourier rapide) de taille *N* en 170, les différentes composantes fréquentielles de la FFT étant ensuite fournies au module de post-traitement 180 effectuant un traitement inverse de celui du prétraitement 110.

Le filtrage de synthèse/analyse étant réalisé dans le domaine temporel, respectivement en sortie du module IFFT et en entrée du module FFT, le système FBMC illustré en Fig. 1 sera dit implémenté dans le domaine temporel.

Le système FBMC est susceptible de représentation dans le domaine fréquentiel comme décrit dans le document de M. Bellanger et al. intitulé « FBMC physical layer : a primer » disponible sur le site www.ict-phydyas.org.

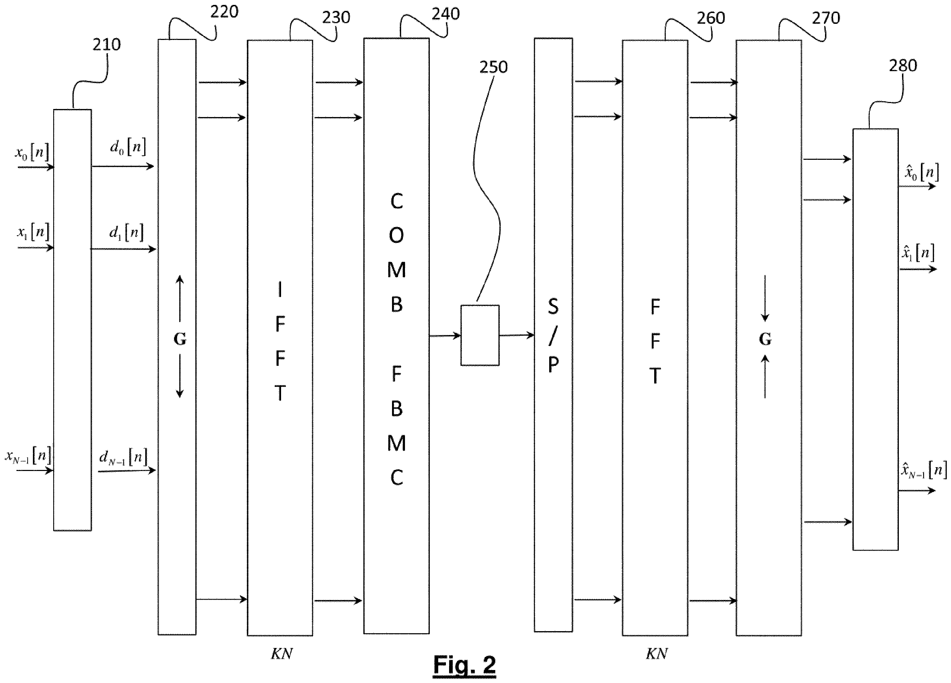

Une implémentation du système FBMC dans le domaine fréquentiel est représentée en Fig. 2.

On retrouve en Fig. 2 le module de prétraitement 210 effectuant une modulation OQAM des données à transmettre.

Chacune des données est ensuite étalée en fréquence sur un intervalle de 2K-1 sous-porteuses adjacentes centré sur une sous-porteuse de sous-canal, chaque donnée étant pondérée par la valeur (réelle) prise par la fonction de transfert du filtre de synthèse à la fréquence correspondante. Autrement dit chaque symbole OQAM $d_i[n]$ est étalé sur 2*K* -1 sous-porteuses adjacentes pour donner :

$$\breve{d}_{i,k}[n] = d_i[n]G_k, \ k = -K+1,...,0,..K-1 \qquad (1)$$

Le module d'étalement en fréquence et de filtrage par le filtre prototype est désigné par 220. On comprendra que cette opération est équivalente à celle du filtrage par les filtres de synthèse 133 dans l'implémentation temporelle.

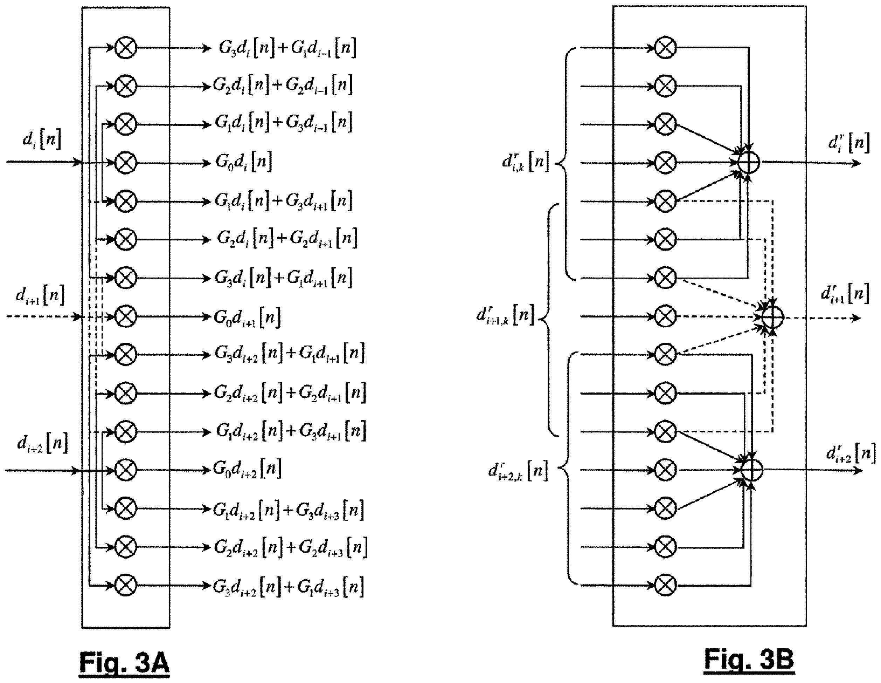

Les données de même parité *i* et *i* + 2 sont séparées spectralement et celles de parités contraires *i* et *i* + 1 se chevauchent comme représenté en Fig. 3A. Ce chevauchement n'engendre toutefois pas d'interférence puisque deux données de parités contraires sont nécessairement respectivement situées sur l'axe réel et l'axe imaginaire. Par exemple, en Fig. 3A, les données $d_i[n]$ et $d_{i+2}[n]$ sont des valeurs réelles (représentées en traits continus) alors que la donnée $d_{i+1}[n]$ est une valeur imaginaire (représentée par des traits en pointillés).

Les données étalées en fréquence et filtrées font ensuite l'objet d'une IFFT de taille *KN* en 230. On notera que la taille de l'IFFT est étendue d'un facteur *K* par rapport à celle de la Fig. 1, le filtrage par les filtres de synthèse se retrouvant ici réalisé en amont de l'IFFT, dans le domaine fréquentiel.

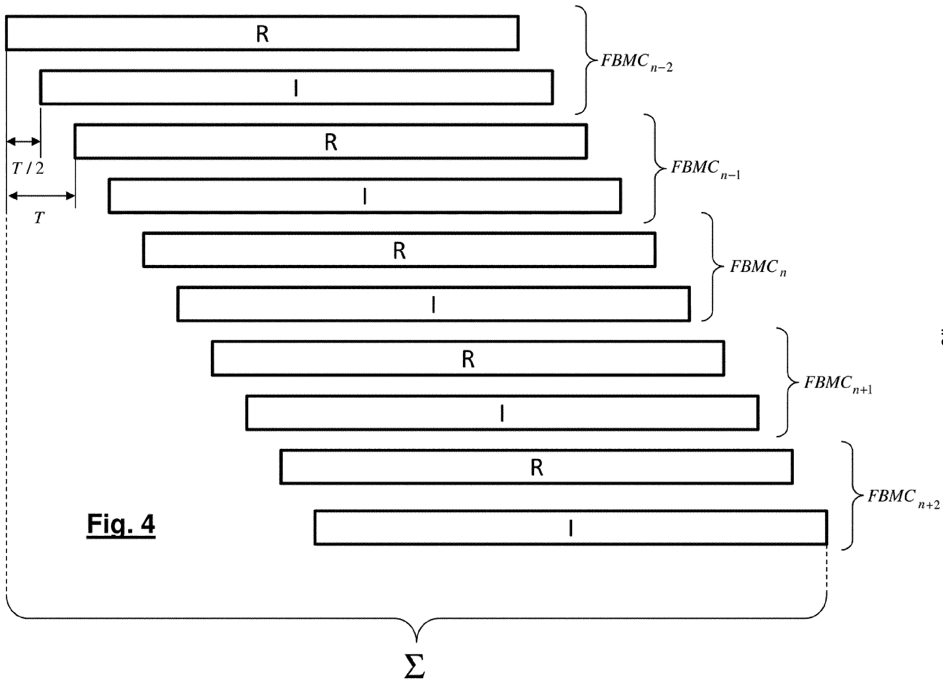

Les sorties de la IFFT sont ensuite combinées dans le module de combinaison 240 comme indiqué en Fig. 4. L'ensemble des échantillons en sortie de l'IFFT représente un symbole FBMC dans le domaine temporel, étant entendu que la partie réelle et la partie imaginaire de ce symbole sont décalées de *T* / 2 . Les symboles FBMC ayant chacun une durée *KT* et se succédant à la cadence *f* = 1/*T*, un symbole FBMC est combiné dans le module 240 avec les *K* / 2 symboles FBMC précédents et *K* / 2 symboles FBMC suivants. Pour cette raison *K* est encore appelé facteur de chevauchement (*overlapping factor*).

Il est à noter que l'opération de combinaison en 240 est équivalente à celle intervenant au sein des filtres de synthèse de la Fig. 1.

Le signal ainsi obtenu est ensuite translaté en bande RF.

Après transmission sur le canal 250, le signal reçu, démodulé en bande de base, est échantillonné par le récepteur à la cadence *Nf* .

Une FFT glissante (la fenêtre de la FFT glissant de *KT* entre deux calculs de FFT) de taille *KN* est effectuée dans le module FFT, 260, sur des blocs de *KN* échantillons consécutifs.

Les sorties de la FFT sont ensuite soumises à un filtrage et un désétalement spectral dans le module 270. L'opération de désétalement a lieu dans le domaine fréquentiel comme représenté en Fig. 3B. Plus précisément les échantillons $\breve{d}_{i,k}^r[n]$ , *k* = -*K* + 1,..., 0,..*K* - 1 correspondant aux 2*K*-1 fréquences (*i*-1)*K* + 1,...*iK* ,... (*i*+1)*K*-1 de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^r[n] \qquad (2)$$

On notera que, comme en Fig. 3A, l'obtention de données ayant des rangs de même parité, par exemple

$d_i^r[n]$ et $d_{i+2}^r[n]$ font appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^r[n]$, $k = 1,.., K$ -1 ainsi qu'aux échantillons $\breve{d}_{i+2,k}^r[n]$, $k = -K + 1,...,1$ .

Le désétalement de données réelles est représenté par des traits continus alors que celui des données imaginaires est représenté par des traits en pointillés.

Il est également important de noter que le filtrage par les filtres d'analyse est ici réalisé dans le domaine fréquentiel, en aval de la FFT, contrairement au mode de réalisation de la Fig. 1.

Les données $d_i^r[n]$ ainsi obtenues sont ensuite fournies à un module de post-traitement 280, effectuant le traitement inverse de celui du module 210, autrement dit une démodulation OQAM.

Un des problèmes à résoudre dans les systèmes FBMC est d'effectuer l'estimation du canal de transmission. Cette estimation de canal est nécessaire pour pouvoir égaliser le signal en réception et restituer le message transmis.

Dans les systèmes OFDM, on effectue généralement une égalisation dite à un coefficient par sous-porteuse, à tout le moins tant que l'étalement temporel du canal reste inférieur à la durée de l'intervalle de garde (ou du préfixe).

La Fig. 3 illustre un schéma d'égalisation connu pour un récepteur OFDM.

Le signal reçu est soumis à une FFT dans le module 310 après démodulation en bande de base et conversion analogique-digitale.

Un estimateur de canal 320 estime les coefficients d'atténuation (complexes) pour chaque sous-porteuse du multiplex OFDM et transmet ces coefficients à un module d'égalisation opérant sur chacune des sous-porteuses. Le module d'égalisation 330 peut effectuer une égalisation par sous-porteuse de type ZF (*Zero Forcing*) ou de type MMSE (*Minimum Mean Square Error*) de manière connue en soi.

L'estimation de canal dans un système OFDM requiert généralement l'insertion de symboles pilotes, c'est-à-dire de symboles connus du récepteur, dans une trame de symboles OFDM transmis par l'émetteur. Ces symboles pilotes sont distribués sur des différentes sous-porteuses du multiplex OFDM. L'estimateur de canal est alors capable de déterminer le coefficient d'atténuation (complexe) du canal pour chacune des sous-porteuses portant un symbole pilote et, le cas échéant, en déduire les coefficients d'atténuation des sous-porteuses restantes à l'aide d'une interpolation dans le domaine fréquentiel.

L'estimation de canal dans les systèmes de télécommunication FBMC utilise des techniques similaires. On trouvera dans l'article de E. Kofidis et al. intitulé « Preamble-based channel estimation in OFDM/OQAM systems : a review », 8 mai 2013, une revue de différentes méthodes d'estimation de canal dans les systèmes utilisant une modulation FBMC.

Toutefois, l'insertion de symboles pilotes ne peut être effectué comme en OFDM dans la mesure où le multiplexage en temps et en fréquence dans une trame FBMC ne garantit pas l'orthogonalité des composantes en phase et en quadrature (c'est-à-dire des parties réelle et imaginaire des symboles pilotes reçus).

Le tableau ci-dessous donne la réponse impulsionnelle d'un canal FBMC pour un exemple de filtre prototype et un facteur de chevauchement $K = 4$. On a noté $n$ l'indice temporel et $k$ l'indice de la sous-porteuse.

| k/n | n-2 | n-1 | n | n+1 | n+2 |
|-----|-----|-----|---|-----|-----|
| k-1 | -0.125 | -0.206j | 0.239 | 0.206j | -0.125 |
| k | 0 | 0.564 | 1 | 0.564 | 0 |
| k+1 | -0.125 | 0.206j | 0.239 | -0.206j | -0.125 |

On comprend ainsi qu'un symbole au temps $n$ et sur la porteuse $k$ peut engendrer une interférence dans un voisinage en temps et en fréquence autour de la position ($n$, $k$), cette interférence étant réelle ou imaginaire selon la position considérée au sein de ce voisinage.

Ainsi si un symbole pilote +1 est transmis en position ($n$, $k$) et une donnée imaginaire $\alpha j$ est transmise en position ($n$, $k$ -1), on reçoit les symboles suivants :

| k/n | n-2 | n-1 | n | n+1 | n+2 |
|-----|-----|-----|---|-----|-----|
| k-1 | -0.125 | 0.564α - 0.206j | 0.239+αj | 0.564α + 0.206j | -0.125 |
| k | -0.125 aj | 0.564 + 0.206j | 1+0.239αj | 0.564 - 0.206j | -0.125αj |

(suite)

| $k/n$ | $n$-2 | $n$-1 | $n$ | $n$+1 | $n$+2 |
|---|---|---|---|---|---|
| $k$+1 | -0.125 | 0.206j | 0.239 | -0.206j | -0.125 |

On comprend dans cet exemple que si l'on peut récupérer la partie réelle du coefficient de canal de transmission, $h_k^R$, il n'en va pas de même pour la partie imaginaire de ce coefficient. Inversement si la donnée adjacente au symbole pilote avait été réelle, on n'aurait pu estimer la partie imaginaire du coefficient de canal de transmission, $h_k^I$, mais non sa partie réelle.

Pour remédier à cette difficulté, il a été notamment proposé de calculer les données environnantes de manière à annuler l'interférence affectant le symbole pilote à la réception (cf. article de E. Kofidis précité). Toutefois, cela introduit de la complexité du côté de l'émetteur (calcul complexe du préambule) et augmente la latence du système. En outre, cette préaccentuation peut conduire localement à des niveaux élevés de PAPR (*Peak-to-Average Power Ratio*) et donc à des problèmes de saturation des amplificateurs.

Quelle que soit l'implémentation, temporelle ou fréquentielle, du récepteur, l'égalisation est généralement réalisée dans le domaine fréquentiel, après le filtrage par le filtre prototype (c'est-à-dire en sortie du module FFT 170 de la Fig. 1 ou du module 270 de la Fig. 2). L'article de Bellanger précité propose alternativement de la réaliser, dans le domaine fréquentiel, avant filtrage par le filtre prototype (c'est-à-dire entre le module FFT 260 et le filtre 270 de la Fig. 2). Toutefois, ce document ne précise comment effectuer alors l'estimation de canal. En effet, à ce stade, la réponse impulsionnelle du système est modifiée en raison de l'absence de filtrage par le filtre prototype et l'estimation de canal n'est pas triviale. L'article "OFDM and FMBC transmission techniques : a compatible high performance proposai for broadband power line communications" par M Bellanger, ISPLC 2010, enseigne une méthode qui utilise une fonction de pondération pour réduire les effets de bord.

Le but de la présente invention est de proposer une méthode d'estimation de canal dans un système de télécommunication FBMC, ne présentant pas les inconvénients précités, notamment qui n'exige pas de préaccentuation au niveau de l'émetteur et qui soit simple à mettre en œuvre.

## EXPOSÉ DE L'INVENTION

La présente invention est définie par les méthodes des revendications 1 et 4. D'autres modes de réalisation font l'objet des revendications dépendantes. En termes généraux, l'invention concerne une méthode d'estimation de canal pour un système de télécommunication FBMC comprenant un émetteur et un récepteur, l'émetteur étant équipé d'un banc de filtres de synthèse et le récepteur étant équipé d'un banc de filtres d'analyse, les filtres d'analyse et de synthèse étant des versions décalées en fréquence d'un filtre prototype, le signal transmis par l'émetteur comprenant un préambule suivi de symboles de données, le préambule comprenant des symboles pilotes distribués en temps et en fréquence, sur une pluralité de sous-porteuses, dans laquelle:

- on effectue une FFT sur le signal reçu par le récepteur, avant que celui-ci ne soit filtré par le banc de filtres d'analyse;
- on extrait des blocs de composantes en sortie de la FFT les symboles pilotes reçus pendant tout ou partie du préambule ;
- on effectue une estimation des coefficients du canal pour ladite pluralité de sous-porteuses en combinant pour chaque sous-porteuse les composantes relatives à cette sous-porteuse et à des blocs successifs au moyen d'une pluralité de coefficients de pondération prédéterminés.

Les caractéristiques spécifiques de la solution revendiquée sont divulguées plus loin.

Le préambule est avantageusement constitué d'une répétition dans le temps des mêmes symboles pilotes distribués sur ladite pluralité de sous-porteuses

Les symboles pilotes peuvent être notamment tous identiques.

De préférence, on prévoit qu'à chaque instant de transmission, une sous-porteuse sur Q sous-porteuses consécutives porte un symbole pilote, Q étant un entier supérieur ou égal à 2, les autres sous-porteuses portant un symbole nul.

Selon un premier mode de réalisation, l'estimation de canal n'est effectuée que sur la partie stationnaire du préambule, les coefficients de pondération relatifs à une même sous-porteuse et à des blocs successifs, sont identiques

et égaux à $\dfrac{1}{v\sigma_k}$, où $v$ est le nombre de blocs successifs pris en considération pour l'estimation du coefficient de canal relatif à la sous-porteuse, $\sigma_k$ dépendant de la réponse impulsionnelle du filtre prototype ainsi que des symboles pilotes présents dans le support temporel et fréquentiel de ce filtre.

Selon un second mode de réalisation, les coefficients de pondération ($\mu_{n,k}$) relatifs à une même sous-porteuse et à des blocs différents sont fonction de la réponse impulsionnelle du filtre prototype, de la taille du préambule, des symboles pilotes présents dans le support temporel et fréquentiel du filtre prototype et du type de données utilisées dans la trame.

L'estimation de canal relatif à une sous-porteuse est avantageusement obtenue comme une combinaison MRC d'estimations effectuées à partir des blocs successifs obtenus sur toute la durée du préambule.

Lesdits coefficients de pondération peuvent être calculés de manière itérative, les coefficients de canal estimés à partir des coefficients de pondération obtenus lors d'une itération étant utilisés pour estimer les données suivant le préambule, lors de l'itération suivante et, inversement, les données ainsi estimées lors d'une itération étant utilisées pour mettre à jour lesdits coefficients de pondération à l'itération suivante.

On peut effectuer une interpolation dans le domaine fréquentiel entre des coefficients du canal pour obtenir un coefficient de canal relatif à une sous-porteuse ne portant pas de symbole pilote.

L'invention a également trait à une méthode d'égalisation au sein d'un récepteur FBMC, dans laquelle on effectue une estimation de canal comme indiqué ci-dessus, à partir des symboles pilotes distribués en temps et en fréquence au sein du préambule et dans laquelle on effectue une égalisation de type ZF ou MMSE sur les symboles de données suivant le préambule, au moyen des coefficients de canal estimés pour ladite pluralité de sous-porteuses.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente une première implémentation d'un système de télécommunication FBMC connu de l'état de la technique ;
La Fig. 2 représente une seconde implémentation d'un système de télécommunication FBMC connu de l'état de la technique ;
La Fig. 3A illustre l'étalement spectral réalisé en amont du module IFFT de la Fig. 2 ;
La Fig. 3B illustre le désétalement spectral réalisé en aval du module FFT dans la Fig. 2 ;
La Fig. 4 illustre la combinaison des symboles FBMC dans la Fig. 2 ;
La Fig. 5 illustre un exemple de signal en sortie d'un émetteur FBMC, avant conversion RF ;
La Fig. 6 représente schématiquement un exemple de récepteur FBMC mettant en œuvre une méthode d'estimation de canal selon un mode de réalisation de l'invention.

## EXPOSÉ DÉTAILLÉ DE MODES DE RÉALISATION PARTICULIERS

Nous considérerons dans la suite un système de télécommunication FBMC comprenant au moins un émetteur et un récepteur. Par exemple l'émetteur peut être une station de base et le récepteur un terminal (liaison descendante) ou bien l'émetteur peut être un terminal et le récepteur une station de base (liaison montante).

Le signal transmis par l'émetteur comprend un préambule constitué de symboles pilotes, suivi de symboles de données. Les symboles pilotes et les symboles de données font l'objet d'une modulation FBMC comme décrit en introduction.

L'idée à la base de l'invention est d'effectuer l'égalisation en amont du filtrage par le filtre prototype, en choisissant une forme appropriée de préambule et en combinant pour chaque sous-porteuse des estimations de canal obtenues en des instants de réception successifs au sein du préambule.

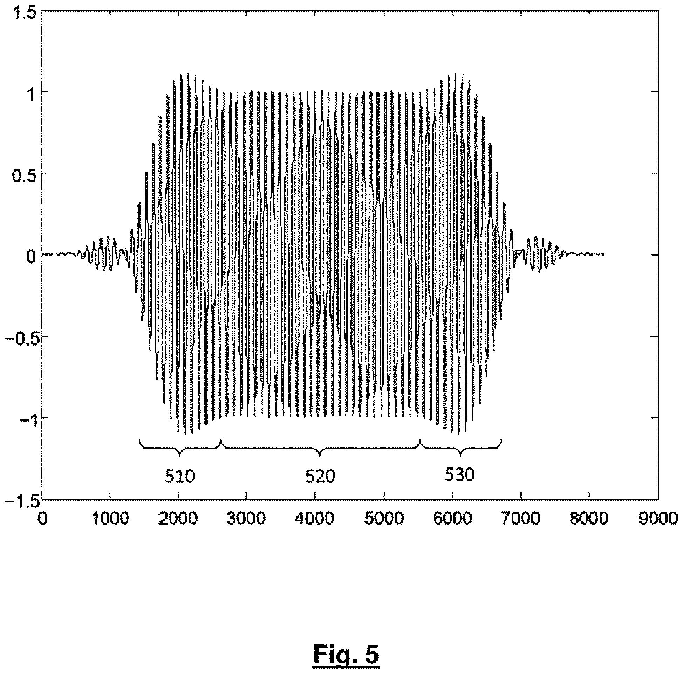

La Fig. 5 représente la forme d'un préambule émis par un émetteur FBMC, avant la transposition en bande RF.

Dans cet exemple, on a supposé que l'on transmettait un symbole pilote une sous-porteuse sur deux, les autres sous-porteuses se voyant affecter des symboles nuls. Pour une même sous-porteuse, les symboles pilotes successifs au sein du préambule sont identiques. Ainsi, dans le cas présent, une sous-porteuse sur deux transporte la séquence de symboles pilotes +1,+1,...,+1 et les autres sous-porteuses transportent des séquences nulles, ce pendant toute la durée du préambule.

On distingue dans la forme d'onde du préambule trois zones distinctes : une première zone, 510, au début du préambule, correspondant à un régime transitoire de durée sensiblement égale au temps de montée du filtre prototype, une seconde zone, 520, correspondant à un régime stationnaire, dans laquelle l'enveloppe du signal est sensiblement constante, et une troisième zone, 530, en fin de préambule, correspondant à nouveau à un régime transitoire, de durée sensiblement égale au temps de descente du filtre prototype.

La forme d'onde du préambule dans la première zone de régime transitoire n'est généralement pas symétrique de celle dans la seconde zone de régime transitoire. En effet, pendant la seconde zone transitoire, les données qui font suite au préambule viennent influencer la forme d'onde en raison du recouvrement temporel des filtres prototypes.

Dans un premier mode de réalisation, on suppose que l'on transmet un motif de symboles pilotes se répétant pendant toute la durée du préambule. Autrement dit, à chaque instant de transmission $n$ du préambule, l'émetteur transmet le bloc de symboles :

$$x_0[n] = P_0;\ x_1[n] = P_1;...;\ x_{N-1}[n] = P_{N-1} \qquad (3)$$

les symboles pilotes $P_0,...,P_{N-1}$ étant respectivement portés par les $N$ sous porteuses. En définitive, le préambule peut être représenté par le tableau suivant dans lequel, comme précédemment, les lignes correspondent aux sous-porteuses et les colonnes aux instants de transmission :

| $P_0$ | $P_0$ | $P_0$ | $P_0$ | ... | $P_0$ | $P_0$ |
|---|---|---|---|---|---|---|
| $P_1$ | $P_1$ | $P_1$ | $P_1$ | ... | $P_1$ | $P_1$ |
| $P_2$ | $P_2$ | $P_2$ | $P_2$ | ... | $P_2$ | $P_2$ |
| ⋮ | ⋮ | ⋮ | ⋮ | ... | ⋮ | ⋮ |
| $P_{N-1}$ | $P_{N-1}$ | $P_{N-1}$ | $P_{N-1}$ | ... | $P_{N-1}$ | $P_{N-1}$ |

Dans une variante avantageuse de réalisation on pourra prévoir qu'une sous-porteuse sur deux portera un symbole pilote (par exemple les sous porteuses d'indices pairs) et que les autres sous-porteuses porteront des symboles nuls. Cette variante pourra être déclinée de manière plus générale, en prévoyant qu'une sous-porteuse sur $Q$ ($Q$ entier supérieur ou égal à 2) sous-porteuses consécutives portera un symbole pilote, les autres sous-porteuses portant un symbole nul.

Quelle que soit la variante, les symboles pilotes pourront être identiques. Ainsi dans le cas d'une alternance symbole pilote/ symbole nul, le préambule aura la structure suivante :

| $P$ | $P$ | $P$ | $P$ | ... | $P$ | $P$ |
|---|---|---|---|---|---|---|
| 0 | 0 | 0 | 0 | ... | 0 | 0 |
| $P$ | $P$ | $P$ | $P$ | ... | $P$ | $P$ |
| 0 | 0 | 0 | 0 | ... | 0 | 0 |
| ⋮ | ⋮ | ⋮ | ⋮ | ... | ⋮ | ⋮ |
| $P$ | $P$ | $P$ | $P$ | ... | $P$ | $P$ |

Dans le premier mode de réalisation, l'estimation de canal est réalisée à partir des symboles pilotes du préambule dans la zone de régime stationnaire, c'est-à-dire après le temps de montée du filtre prototype, la montée du filtre démarrant au début du préambule et avant le temps de descente du filtre prototype, la descente du filtre s'achevant en fin de préambule.

On suppose que la réponse du canal ne varie pas pendant la durée du préambule.

Dans ce cas, le signal FBMC en sortie du canal, après translation en bande de base et échantillonnage mais avant filtrage par le banc de filtres d'analyse, peut s'écrire, en régime stationnaire :

$$r(n) = \sum_k h_k \left( \sum_{p\,;n-p \in I_t}\ \sum_{i\,;k-i \in I_f} P_i g_{n-p,k-i} \right) \qquad (4)$$

dans lequel on a respectivement noté $I_t$ et $I_f$ le support temporel et le support fréquentiel de la réponse impulsionnelle du filtre prototype, $n$ est l'indice du bloc temporel et $k$ est l'indice de la sous-porteuse.

Il résulte de (4) qu'en régime stationnaire, le symbole $r_k(n)$ reçu sur une sous-porteuse $k$ est théoriquement constant et égal à :

$$r_k(n) = h_k \left( \sum_{q \in I_t} \sum_{i; k-i \in I_f} P_i g_{q,k-i} \right) = r_k \qquad (5)$$

Le terme entre parenthèses est connu du récepteur puisque les symboles pilotes sont par définition connus et les coefficients du filtre prototype le sont également.

En pratique, les symboles transmis sur les différentes sous-porteuses sont non seulement affectés par un coefficient d'atténuation (coefficient complexe) mais également par un bruit que nous supposerons blanc additif gaussien.

L'estimation de canal pour la sous-porteuse $k$ est alors fournie par :

$$\langle h_k \rangle = \frac{1}{v \left( \sum_{q \in I_t} \sum_{i; k-i \in I_f} P_i g_{q,k-i} \right)} \sum_{n=n_0}^{n_0+v} r_k(n) \qquad (6)$$

où $v$ est le nombre de symboles pris en considération dans le régime stationnaire.

On remarquera que la somme au dénominateur de l'expression (6) peut être calculée une fois pour toutes à partir des symboles pilotes $P_0,...,P_{N-1}$ et de la réponse du filtre prototype, ce pour chaque sous-porteuse. L'expression (6) peut alors se réécrire :

$$\langle h_k \rangle = \frac{1}{v \sigma_k} \sum_{n=n_0}^{n_0+v} r_k(n) \qquad (7)$$

où les $\sigma_k = \left( \sum_{q \in I_t} \sum_{i; k-i \in I_f} P_i g_{q,k-i} \right)$, $k = 0,...,N-1$ sont les sommes (complexes) ainsi pré-calculées.

Le premier mode de réalisation suppose toutefois que le préambule soit suffisamment long pour qu'un régime stationnaire puisse s'établir. Plus précisément, pour un filtre prototype de durée $KN$, le préambule doit être de durée au moins égale à $(2K-1)N$. Cette durée de préambule peut être pénalisante lorsque les trames de données sont courtes (rapport élevé overhead/data). Dans ce cas, on préférera mettre en œuvre le second mode de réalisation de l'invention.

Dans le second mode de réalisation, on suppose que l'on transmet un préambule composé d'un motif prédéterminé de symboles pilotes. Le motif peut être constitué de la répétition temporelle d'un motif élémentaire comme dans le premier mode de réalisation. Toutefois, contrairement au premier mode de réalisation, on peut relaxer la contrainte de constance dans le temps, autrement dit il n'est pas nécessaire que les symboles pilotes portés par une même sous-porteuse soient identiques.

Dans ce cas, le signal en sortie du canal de transmission, après translation en bande de base, peut s'écrire :

$$r(n) = \sum_k h_k \left( \sum_{p; n-p \in I_t} \sum_{i; k-i \in I_f} P_{p,i} g_{n-p,k-i} \right) \qquad (8)$$

où $P_{p,i}$ est le symbole pilote porté par la sous-porteuse d'indice $p$ à d'instant de transmission $i$.

Pour chaque symbole pilote $P_{n,k}$ on peut estimer le rapport signal sur interférence au niveau du récepteur par :

$$\lambda_{n,k} = \frac{\left|P_{n,k}\right|^2}{\left|\displaystyle\sum_{\substack{p \neq n \\ n-p \in I_t}} \sum_{\substack{i \neq k \\ k-i \in I_f}} P_{p,i} g_{n-p,k-i}\right|^2} \tag{9}$$

L'estimation de canal pour la sous-porteuse *k* est alors obtenue en effectuant une combinaison MRC (*Maximum Ratio Combining*) des estimations en différents instants de réception du préambule, soit :

$$\langle h_k \rangle = \frac{1}{\displaystyle\sum_{n=n_0}^{n_0+\bar{v}} \lambda_{n,k}} \sum_{n=n_0}^{n_0+\bar{v}} \lambda_{n,k} \frac{r_k(n)}{\left(\displaystyle\sum_{p; n-p \in I_t} \sum_{i; k-i \in I_f} P_{p,i} g_{n-p,k-i}\right)} \tag{10}$$

où $\bar{v}$ est le nombre d'instants de réception considérés dans le préambule.

Les instants de réception considérés peuvent ici être choisis hors du régime stationnaire, en particulier pendant la première zone transitoire 510 ou pendant la seconde zone transitoire 530 de la Fig. 5. Toutefois, si des échantillons sont pris en compte dans la seconde zone transitoire, des symboles de données apparaissent dans la somme au dénominateur de l'expression (9) ainsi que dans celle au dénominateur de l'expression (10), en raison du débordement du support du filtre prototype sur la partie « données » de la trame. On a alors recours à un traitement statistique en faisant la moyenne sur les différents symboles de données possibles. On pourra supposer à cet effet que la densité de probabilité des symboles OQAM est équirépartie.

Lorsque les instants de réception considérés sont pris dans la première zone de régime transitoire ou la zone de régime stationnaire, les coefficients (complexes) de pondération intervenant dans l'expression (10) peuvent être calculés une fois pour toutes et stockés dans une table de récepteur, soit :

$$\mu_{n,k} = \frac{\lambda_{n,k}}{\displaystyle\sum_{n=n_0}^{n_0+\bar{v}} \lambda_{n,k}} \frac{1}{\left(\displaystyle\sum_{p; n-p \in I_t} \sum_{i; k-i \in I_f} P_{p,i} g_{n-p,k-i}\right)} \tag{11}$$

L'expression (10) se réduit alors plus simplement à :

$$\langle h_k \rangle = \sum_{n=n_0}^{n_0+\bar{v}} \mu_{n,k} r_k(n) \tag{12}$$

Lorsque certains instants de réception, pris en compte pour l'estimation de canal, sont situés dans la seconde zone transitoire du préambule, on peut encore pré-calculer les coefficients $\mu_{n,k}$ mais, cette fois, en effectuant une moyenne statistique sur les symboles de données intervenant dans la somme au dénominateur de l'expression (9) et dans celle au dénominateur de l'expression (11). Plus précisément lorsqu'un symbole $P_{p,i}$ figurant dans cette somme est en fait un symbole de données, les différents symboles OQAM possibles sont envisagés avec la même probabilité et la valeur moyenne de $\mu_{n,k}$ est calculée.

De manière plus générale, on pourra déterminer, par simulation, les coefficients de pondération $\mu_{n,k}$ en tenant compte du type de filtre prototype, du temps de montée (égal au temps de descente) du filtre prototype, de la taille du préambule, du type de données utilisées dans la trame. Les coefficients de pondération sont alors stockés dans une table (*look-up table*) du récepteur qui est adressée par les paramètres précités.

Selon une variante du second mode de réalisation, on pourra effectuer une estimation itérative du canal. Lors de la première itération, une première estimation des coefficients est obtenue à partir des coefficients de pondération MRC comme expliqué plus haut. Lors de chacune des itérations successives, ces coefficients de pondération sont ensuite mis à jour en estimant les données suivant le préambule, après que ces données aient été égalisées au moyen des coefficients de canal estimés à l'itération précédente. Ainsi, au fur et à mesure des itérations, l'estimation de canal permet de raffiner l'estimation de ces données et donc les coefficients de pondération. Inversement, l'estimation plus précise des données permet de mettre à jour les coefficients de pondération et de raffiner l'estimation de canal. Les itérations peuvent être stoppées lorsqu'un critère de convergence est satisfait ou bien au bout d'un nombre prédéterminé d'itérations.

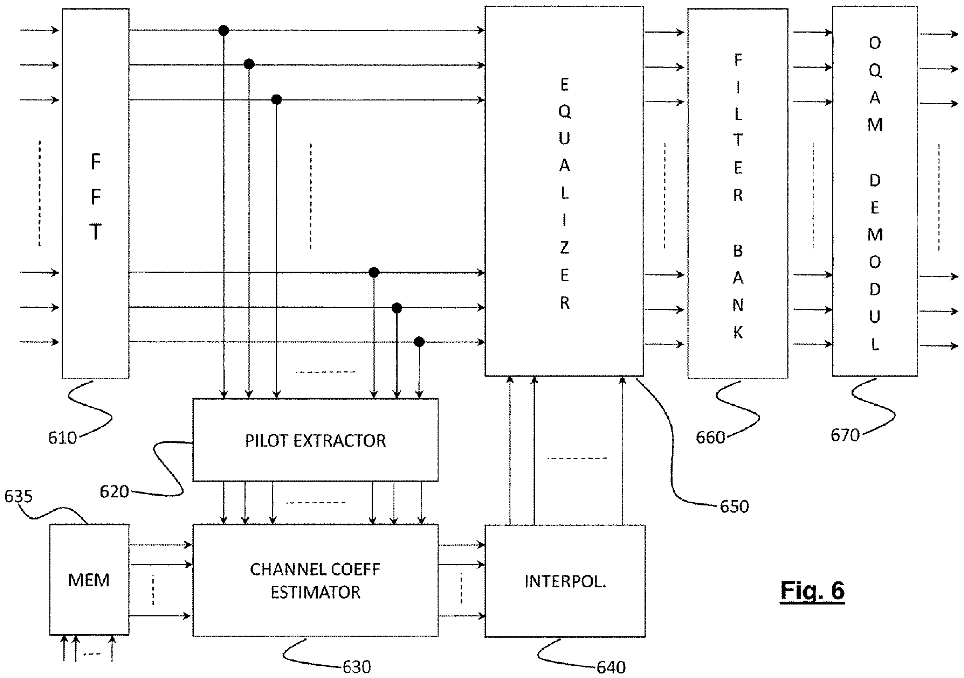

La Fig. 6 illustre un exemple de récepteur FBMC mettant en œuvre une méthode d'estimation de canal selon un mode de réalisation de l'invention.

Le récepteur FBMC représenté utilise une implémentation fréquentielle telle qu'illustrée en Fig. 2.

Le signal reçu est translaté en bande de base et échantillonné à la cadence $Nf$ et soumis à une FFT de taille $KN,$ dans le module de FFT, 610.

Pour chaque bloc d'échantillons en sortie de la FFT, le module d'extraction, 620, extrait les symboles pilotes reçus.

Dans le premier mode de réalisation, l'extraction des symboles pilotes a lieu pendant le régime stationnaire du préambule, dans le second mode de réalisation, elle peut avoir lieu pendant tout ou partie du préambule, indépendamment de la nature stationnaire ou transitoire de la partie considérée.

Le module d'estimation de canal, 630, effectue une estimation de canal au moyen de l'expression (7) ou (12), selon le mode de réalisation envisagé.

Les coefficients complexes $\sigma_k$ ou $\mu_{n,k}$ sont stockés dans une mémoire 635. Le cas échéant, cette mémoire peut être adressée par des paramètres (longueur de filtre, taille de préambule, etc.) comme expliqué plus haut.

Les estimations de coefficients de canal $\langle h_k \rangle$ pour chaque sous-porteuse $k$ portant un symbole pilote sont fournies au module d'interpolation 640. Ce module détermine par interpolation les coefficients de canal manquants. Ainsi, lorsque le coefficient de canal est estimé seulement pour une sous-porteuse sur $Q$, on pourra procéder par interpolation à une estimation de coefficients de canal pour les sous-porteuses restantes.

Les coefficients de canal pour l'ensemble des sous-porteuses sont ensuite fournis au module d'égalisation 650. Ce module effectue une égalisation ZF ou MMSE des symboles reçus à partir des coefficients de canal ainsi estimés. On rappelle qu'une égalisation de type ZF consiste à multiplier les symboles sur les différentes sous-porteuses par les coefficients $\dfrac{1}{h_k}$ , $k = 0,...,N-1$, alors qu'une égalisation de type MMSE consister à multiplier ces mêmes symboles par les coefficients $\dfrac{h_k^*}{|h_k|^2 + \sigma^2}$ , $k = 0,...,N-1$ où $\sigma^2$ est une estimation de la puissance de bruit sur chaque sous-porteuse (la puissance de bruit est supposée identique sur les différentes sous-porteuse).

Après égalisation, les symboles sont filtrés dans le domaine fréquentiel par une banque de filtres d'analyse (copies translatées en fréquence du filtre prototype), 660, puis fournies à un module de démodulation OQAM.

La méthode d'estimation de canal selon le premier ou le second mode de réalisation de l'invention peut également s'appliquer dans le cas d'une implémentation temporelle du récepteur FBMC. Dans ce cas, l'égalisation est réalisée dans le domaine temporel en aval du filtrage par la banque de filtres d'analyse.

## Revendications

**1.** Méthode d'estimation de canal pour un système de télécommunication FBMC comprenant un émetteur et un récepteur, l'émetteur étant équipé d'un banc de filtres de synthèse et le récepteur étant équipé d'un banc de filtres d'analyse, les filtres d'analyse et de synthèse étant des versions décalées en fréquence d'un filtre prototype, le signal transmis par l'émetteur comprenant un préambule suivi de symboles de données, le préambule comprenant des symboles pilotes distribués en temps et en fréquence, sur une pluralité $N$ de sous-porteuses, **caractérisée en ce que** le préambule est constitué d'une répétition dans le temps des mêmes symboles pilotes distribués sur ladite pluralité de sous-porteuses, le préambule étant de durée supérieure ou égale à $(2K-1)N$ où $K$ est le facteur de chevauchement des filtres prototypes, et que:

- on effectue une FFT sur le signal reçu par le récepteur, avant que celui-ci ne soit filtré par le banc de filtres d'analyse ;
- on extrait des blocs de composantes fréquentielles en sortie de la FFT, les symboles pilotes reçus pendant tout ou partie du préambule ;
- on effectue une estimation des coefficients du canal pour ladite pluralité de sous-porteuses en combinant pour chaque sous-porteuse les composantes relatives à cette sous-porteuse et à des blocs successifs et en pondérant la combinaison obtenue par un coefficient de pondération associée à une sous-porteuse, ladite estimation n'étant effectuée que sur la partie stationnaire du préambule, le coefficient de pondération associé à une sous-porteuse et à des blocs successifs, étant égal à $\dfrac{1}{v\sigma_k}$ , où $v$ est le nombre de blocs successifs pris en considération pour l'estimation du coefficient de canal relatif à la sous-porteuse, et $\sigma_k = \left( \displaystyle\sum_{q\in I_t} \sum_{i;k-i\in I_f} P_i g_{q,k-i} \right)$ où $g_{q,k}$ , $q \in I_t$ sont les coefficients du filtre prototype associé à la sous-porteuse $k$ et $P_i$ sont les symboles pilotes présents dans le support temporel $I_t$ et fréquentiel $I_f$ de ce filtre.

2. Méthode d'estimation de canal selon la revendication 1, **caractérisée en ce que** les symboles pilotes sont tous identiques.

3. Méthode d'estimation de canal selon la revendication 2, **caractérisée en ce qu'**à chaque instant de transmission, une sous-porteuse sur $Q$ sous-porteuses consécutives porte un symbole pilote, $Q$ étant un entier supérieur ou égal à 2, les autres sous-porteuses portant un symbole nul.

4. Méthode d'estimation de canal pour un système de télécommunication FBMC comprenant un émetteur et un récepteur, l'émetteur étant équipé d'un banc de filtres de synthèse et le récepteur étant équipé d'un banc de filtres d'analyse, les filtres d'analyse et de synthèse étant des versions décalées en fréquence d'un filtre prototype, le signal transmis par l'émetteur comprenant un préambule suivi de symboles de données, le préambule comprenant des symboles pilotes distribués en temps et en fréquence, sur une pluralité $N$ de sous-porteuses, , **caractérisée en ce que** :

   - on effectue une FFT sur le signal reçu par le récepteur, avant que celui-ci ne soit filtré par le banc de filtres d'analyse ;
   - on extrait des blocs de composantes fréquentielles en sortie de la FFT, les symboles pilotes reçus pendant tout ou partie du préambule ;
   - on effectue une estimation des coefficients du canal pour ladite pluralité de sous-porteuses en combinant pour chaque sous-porteuse les composantes relatives à cette sous-porteuse et à des blocs successifs au moyen d'une pluralité de coefficients de pondération, les coefficients de pondération ($\mu_{n,k}$) relatifs à une même sous-porteuse $k$ et à des blocs $n = n_0,..,n_0 + \overline{v}$ différents, où $n_0,..,n_0 + \overline{v}$ sont des instants de réception dans une zone de régime stationnaire du préambule, et où lesdits coefficients de pondération sont égaux à

   $$\mu_{n,k} = \frac{\lambda_{n,k}}{\displaystyle\sum_{n=n_0}^{n_0+\overline{v}} \lambda_{n,k}} \frac{1}{\left( \displaystyle\sum_{p;n-p\in I_t} \sum_{i;k-i\in I_f} P_{p,i} g_{n-p,k-i} \right)}$$ où $\lambda_{n,k}$ est une estimation du rapport signal sur interférence au niveau du récepteur à partir du symbole pilote $P_{n,k}$, et $g_{q,k}$, $q \in I_t$ sont les coefficients du filtre prototype associé à la sous-porteuse $k$ ; $I_t$ et $I_f$ étant respectivement le support temporel et le support fréquentiel de ce filtre.

5. Méthode d'estimation de canal selon l'une des revendications 4, **caractérisée** en ce l'on calcule lesdits coefficients de pondération de manière itérative, les coefficients de canal estimés à partir des coefficients de pondération obtenus lors d'une itération étant utilisés pour estimer les données suivant le préambule, lors de l'itération suivante et, inversement, les données ainsi estimées lors d'une itération étant utilisées pour mettre à jour lesdits coefficients de pondération à l'itération suivante.

6. Méthode d'estimation de canal selon l'une des revendications précédentes, **caractérisée en ce que** l'on effectue une interpolation dans le domaine fréquentiel entre des coefficients du canal pour obtenir un coefficient de canal relatif à une sous-porteuse ne portant pas de symbole pilote.

7. Méthode d'égalisation dans un récepteur FBMC, **caractérisée en ce que** l'on effectue une estimation de canal selon l'une des revendications précédentes à partir des symboles pilotes distribués en temps et en fréquence au sein du préambule et que l'on effectue une égalisation de type ZF ou MMSE sur les symboles de données suivant le préambule, au moyen des coefficients de canal estimés pour ladite pluralité de sous-porteuses.

**Patentansprüche**

1. Verfahren zur Kanalschätzung für ein FBMC-Telekommunikationssystem mit einem Sender und einem Empfänger, wobei der Sender mit einer Synthesefilterbank und der Empfänger mit einer Analysefilterbank ausgestattet ist, wobei die Analyse- und Synthesefilter frequenzverschobene Versionen eines Prototypfilters sind, wobei das vom Sender übertragene Signal eine Präambel gefolgt von Datensymbolen umfasst, wobei die Präambel Pilotsymbole umfasst, die zeitlich und frequenzmäßig auf eine Vielzahl $N$ von Unterträgern verteilt sind,
**dadurch gekennzeichnet, dass** die Präambel aus einer zeitlichen Wiederholung der auf die Vielzahl von Unterträgern verteilten gleichen Pilotsymbole besteht, wobei die Präambel eine Dauer länger oder gleich $(2K - 1)$ $N$ hat, wobei $K$ der Überlappungsfaktor der Prototypenfilter ist, und dass

   - eine FFT an dem vom Empfänger empfangenen Signal durchgeführt wird, bevor dieses durch die Analysefilterbank gefiltert wird;
   - aus den Blöcken von Frequenzkomponenten am Ausgang der FFT die während der gesamten oder eines Teils der Präambel empfangenen Pilotsymbole extrahiert werden;
   - eine Schätzung der Kanalkoeffizienten für die Vielzahl von Unterträgern durchgeführt wird, indem für jeden Unterträger die Komponenten, die sich auf diesen Unterträger und auf aufeinanderfolgende Blöcke beziehen, kombiniert werden und die erhaltene Kombination mit einem einem Unterträger zugeordneten Gewichtungskoeffizienten gewichtet wird, wobei die Schätzung nur über den stationären Teil der Präambel durchgeführt wird, wobei der einem Unterträger und aufeinanderfolgenden Blöcken zugeordnete Gewichtungskoeffizient

   gleich $\frac{1}{v\sigma_k}$ ist, worin $v$ die Anzahl der aufeinanderfolgenden Blöcke ist, die bei der Schätzung des Kanalkoeffizienten bezüglich des Unterträgers berücksichtigt werden, und

$$\sigma_k = \left( \sum_{q \in I_t} \sum_{i;k-i \in I_f} P_i g_{q,k-i} \right)$$

   worin $g_{q,k}$, $q \in I_t$ Koeffizienten des dem Unterträger zugeordneten PrototypFilters $k$ sind und $P_i$ die in dem Zeitträger $I_t$ und dem Frequenzträger $I_f$ dieses Filters vorhandenen Pilotsymbole sind.

2. Verfahren zur Kanalschätzung nach Anspruch 1, **dadurch gekennzeichnet, dass** die Pilotsymbole alle identisch sind.

3. Verfahren zur Kanalschätzung nach Anspruch 2, **dadurch gekennzeichnet, dass** zu jedem Übertragungszeitpunkt ein Unterträger von Q aufeinanderfolgenden Unterträgern ein Pilotsymbol trägt, wobei Q eine ganze Zahl größer oder gleich 2 ist, und die anderen Unterträger ein Nullsymbol tragen.

4. Verfahren zur Kanalschätzung für ein FBMC-Telekommunikationssystem mit einem Sender und einem Empfänger, wobei der Sender mit einer Synthesefilterbank und der Empfänger mit einer Analysefilterbank ausgestattet ist, wobei die Analyse- und Synthesefilter frequenzverschobene Versionen eines Prototypfilters sind, wobei das vom Sender übertragene Signal eine Präambel gefolgt von Datensymbolen umfasst, wobei die Präambel Pilotsymbole umfasst, die zeitlich und frequenzmäßig auf eine Vielzahl $N$ von Unterträgern verteilt sind,
**dadurch gekennzeichnet, dass**

   - eine FFT an dem vom Empfänger empfangenen Signal durchgeführt wird, bevor dieses durch die Analysefilterbank gefiltert wird;
   - aus den Blöcken von Frequenzkomponenten am Ausgang der FFT die während der gesamten oder eines Teils der Präambel empfangenen Pilotsymbole extrahiert werden;
   - eine Schätzung der Kanalkoeffizienten für die Vielzahl von Unterträgern durchgeführt wird, indem für jeden Unterträger die Komponenten, die sich auf diesen Unterträger und auf aufeinanderfolgende Blöcke beziehen, mittels einer Vielzahl von Gewichtungskoeffizienten kombiniert werden, wobei sich die Gewichtungskoeffizienten ($\mu_{n,k}$) auf einen gleichen Unterträger $k$ und auf verschiedene Blöcke $n = n_0, ..., n_0 + \bar{v}$ beziehen, worin $n = n_0, ..., n_0 + \bar{v}$ Empfangszeitpunkte in einem stationären Betriebsbereich der Präambel sind, und wobei die Gewichtungskoeffizienten gleich

$$\mu_{n,k} = \frac{\lambda_{n,k}}{\displaystyle\sum_{n=n_0}^{n_0+\bar{v}}\lambda_{n,k}} \cdot \frac{1}{\left(\displaystyle\sum_{p;n-p\in I_t}\ \sum_{i;k-i\in I_f} P_{p,i}\,g_{n-p,k-i}\right)}$$

sind, worin $\lambda_{n,k}$ eine Schätzung des Signal-zu-Interferenz-Verhältnisses am Empfänger aus dem Pilotsymbol $P_{n,k}$ ist, und $g_{q,k}$ , $q \in I_t$ die Koeffizienten des dem Unterträger $k$ zugeordneten Prototypfilters sind, wobei $I_t$ und $I_f$ der Zeitträger bzw. der Frequenzträger dieses Filters ist.

5. Verfahren zur Kanalschätzung nach Anspruch 4, **dadurch gekennzeichnet, dass** die Gewichtungskoeffizienten iterativ berechnet werden, wobei die anhand der bei einer Iteration erhaltenen Gewichtungskoeffizienten geschätzten Kanalkoeffizienten verwendet werden, um die der Präambel folgenden Daten bei der nächsten Iteration zu schätzen, und umgekehrt die bei einer Iteration so geschätzten Daten verwendet werden, um die Gewichtungskoeffizienten bei der nächsten Iteration zu aktualisieren.

6. Verfahren zur Kanalschätzung nach einem der vorhergehenden Ansprüche, **dadurch gekennzeichnet, dass** eine Interpolation im Frequenzbereich zwischen Kanalkoeffizienten durchgeführt wird, um einen Kanalkoeffizienten zu erhalten, der sich auf einen Unterträger bezieht, der kein Pilotsymbol trägt.

7. Verfahren zur Entzerrung in einem FBMC-Empfänger, **dadurch gekennzeichnet, dass** eine Kanalschätzung nach einem der vorhergehenden Ansprüche ausgehend von den zeitlich und frequenzmäßig verteilten Pilotsymbolen innerhalb der Präambel durchgeführt wird und dass eine Entzerrung vom Typ ZF oder MMSE an den Datensymbolen, die der Präambel folgen, mittels der geschätzten Kanalkoeffizienten für die Vielzahl von Unterträgern durchgeführt wird.

## Claims

1. Channel estimating method for an FBMC telecommunication system comprising a transmitter and a receiver, the transmitter being provided with a synthesis filter bank and the receiver being provided with an analysis filter bank, the analysis and synthesis filters being frequency shifted versions of a prototype filter, the signal transmitted by the transmitter comprising a preamble followed by data symbols, the preamble comprising pilot symbols distributed in time and in frequency, on a plurality $N$ of sub-carriers, **characterised in that** the preamble is composed of a repetition in time of the same pilot symbols distributed on said plurality of sub-carriers, the preamble being of duration greater than or equal to $(2K-1)N$ in which $K$ is the overlapping factor of the prototype filters, and **in that**:

   - an FFT is done on the signal received by the receiver, before the signal is filtered by the analysis filter bank;
   - the pilot symbols received during all or some of the preamble are extracted from the frequency component blocks output from the FFT;
   - channel coefficients are estimated for said plurality of sub-carriers by taking each sub-carrier and combining the components for this sub-carrier and for successive blocks and by weighting the combination obtained by a weighting factor associated with a sub-carrier, said estimate only being made on the stationary part of the preamble, the weighting factor for one sub-carrier and successive blocks, being equal to $\dfrac{1}{v\sigma_k}$ , where $v$ is the number of successive blocks considered to estimate the channel coefficient for the sub-carrier, and

   $$\sigma_k = \left(\sum_{q\in I_t}\ \sum_{i;k-i\in I_f} P_i\,g_{q,k-i}\right)$$

   in which $g_{q,k}$ $q \in I_t$ are the coefficients of the prototype filter associated with the subcarrier $k$ and $P_i$ are the pilot symbols present in the temporal support $I_t$ and frequency support $I_f$ of this filter.

2. Channel estimating method according to claim 1, **characterised in that** the pilot symbols are all identical.

3. Channel estimating method according to claim 2, **characterised in that** at each transmission instant, one sub-carrier out of $Q$ consecutive sub-carriers carries a pilot symbol, where $Q$ is an integer greater than or equal to 2, the other sub-carriers carrying a null symbol.

4. Channel estimating method for an FBMC telecommunication system comprising a transmitter and a receiver, the transmitter being provided with a synthesis filter bank and the receiver being provided with an analysis filter bank, the analysis and synthesis filters being frequency shifted versions of a prototype filter, the signal transmitted by the transmitter comprising a preamble followed by data symbols, the preamble comprising pilot symbols distributed in time and in frequency, on a plurality $N$ of sub-carriers, **characterised in that**:

   - an FFT is done on the signal received by the receiver, before the signal is filtered by the analysis filter bank;
   - the pilot symbols received during all or some of the preamble are extracted from the frequency component blocks output from the FFT;
   - channel coefficients are estimated for said plurality of sub-carriers by taking each sub-carrier and combining the components for this sub-carrier and for successive blocks by means of a plurality of a weighting factors, the weighting factors ($\mu_{n,k}$) for a same sub-carrier $k$ and for different blocks $n = n_0,..,n_0 + \overline{v}$, in which $n_0,..,n_0 + \overline{v}$ are reception instants in a stationary condition zone of the preamble, and in which said weighting factors are equal

   $$\mu_{n,k} = \frac{\lambda_{n,k}}{\sum\limits_{n=n_0}^{n_0+\overline{v}} \lambda_{n,k}} \frac{1}{\left( \sum\limits_{p;n-p\in I_t} \sum\limits_{i;k-i\in I_f} P_{p,i} g_{n-p,k-i} \right)}$$

   to ＿＿＿＿＿ in which $\lambda_{n,k}$ is an estimate of the signal-to-interference ratio at the receiver based on the pilot symbol $P_{n,k}$ and $g_{q,k}, q \in I_t$ are coefficients of the prototype filter associated with the subcarrier $k$ ; $I_t$ and $I_f$ being respectively the temporal support and the frequency support of this filter.

5. Channel estimating method according to one of claims 4, **characterised in that** said weighting factors are calculated iteratively, the channel coefficients estimated from weighting factors obtained during one iteration are used to estimate the data following the preamble, during the next iteration, and vice versa, the data thus estimated during one iteration being used to update said weighting factors during the next iteration.

6. Channel estimating method according to one of the previous claims, **characterised in that** interpolation is done in the frequency domain between channel coefficients to obtain a channel coefficient for a sub-carrier not carrying a pilot symbol.

7. Equalisation method within an FBMC receiver, **characterised in that** a channel estimate is made according to one of the previous claims, using pilot symbols distributed in time and in frequency within the preamble and **in that** a ZF or MMSE type equalisation is made on the data symbols following the preamble, making use of the channel coefficients estimated for said plurality of sub-carriers.

EP 2 879 341 B1

**Fig. 1**

**Fig. 2**

**Fig. 3B**

**Fig. 3A**

**Fig. 4**

**Fig. 5**

Fig. 6

EP 2 879 341 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. FARHANG-BOUROUJENY.** OFDM versus filter bank multicarrier. *IEEE Signal Processing Magazine,* Mars 2011, 91-112
- **B. HIROSAKI.** An orthogonally multiplexed QAM system using the discrète Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183
- **M. BELLANGER et al.** *FBMC physical layer : a primer, www.ict-phydyas.org*
- **E. KOFIDIS et al.** *Preamble-based channel estimation in OFDM/OQAM systems : a review,* 08 Mai 2013
- **M BELLANGER.** OFDM and FMBC transmission techniques : a compatible high performance proposai for broadband power line communications. *ISPLC,* 2010